# EUROPÄISCHE PATENTANMELDUNG

(11) **EP 2 027 960 A2**
(43) Veröffentlichungstag der Anmeldung: **25.02.2009**
(21) Anmeldenummer: 08014735.8
(22) Anmeldetag: 20.08.2008
(51) Int. Cl.: B23F 21/02, B23F 1/02

(54) **Werkzeug und Verfahren zum diskontinuierlichen Profilschleifen außen- bzw. innenverzahnter Zylinderräder**

(30) Priorität: 24.08.2007 DE 102007040894
(71) Anmelder: GLEASON-PFAUTER, Maschinenfabrik GmbH, 71636 Ludwigsburg (DE)
(72) Erfinder: Faulstich, Ingo, Dr.-Ing., 71634 Ludwigsburg (DE); Sander, Björn, Dr., 70195 Stuttgart (DE); Vucetic, Dragan, 71701 Schwieberdingen (DE)
(74) Vertreter: Jackisch-Kohl, Anna-Katharina

(57) **Zusammenfassung**

Das Werkzeug (5) ist rotationssymmetrisch ausgebildet und hat im Achsschnitt mehrere in Achsrichtung nebeneinander angeordnete Profile, die so ausgelegt sind wie die Profile separater Profilschleifscheiben, die an den entsprechenden Stellen auf einer Werkzeugspindel positioniert sind und einen Scheibensatz bilden. Das Werkzeug ist abrichtbar und umprofilierbar. Die Geometrie der einzelnen Profile ist so festgelegt, dass zum Schruppen zumindest mehr als zwei Flanken zum Einsatz kommen, und dass beim Schlichten die nur zum Schruppen vorgesehenen umprofilierten Flanken so weit zurückgesetzt worden sind, dass sie beim Schlichten keinen Kontakt mit den Werkstückflanken haben. Für das Schruppen werden zumindest mehr als zwei Flanken eingesetzt. Zum Schlichten können nur zwei Flanken, die zu einer Scheibe gehören, oder nur Flanken eingesetzt werden, die zu mindestens zwei Scheiben gehören. Diese zum Schlichten vorgesehenen Scheiben haben eine besonders gut zum Schlichten geeignete Spezifikation, während die übrigen Scheiben eine besonders gut zum Schruppen geeignete Spezifikation aufweisen. Für den Schruppvorgang werden die zum Schlichten vorgesehenen Scheiben durch Umprofilieren so weit zurückgesetzt, dass sie keinen Kontakt mit den Werkstückflanken erhalten. Umgekehrt werden zum Schlichten die Schruppflanken entsprechend so umprofiliert, dass sie mit den Werkstückflanken keinen Kontakt erhalten.

## Beschreibung

Die Erfindung betrifft ein Werkzeug zum diskontinuierlichen Profilschleifen von außen- bzw. innenverzahnten Zylinderrändern nach dem Oberbegriff des Anspruches 1 bzw. 4 sowie ein Verfahren zum diskontinuierlichen Profilschleifen von außen- bzw. innenverzahnten Zylinderrädern mit einem solchen Werkzeug nach dem Oberbegriff des Anspruches 5 bzw. 10 bzw. 11.

Dieses Verfahren und Werkzeug werden zum diskontinuierlichen Profilschleifen zylindrischer Verzahnungen insbesondere im Bereich großer Werkstückabmessungen, wie sie zum Beispiel in Windkraftanlagen oder im Schiffsbau eingesetzt werden, verwendet. Dort können Zahnräder Durchmesser von mehreren Metern haben. Zurzeit besteht ein großer Bedarf an derartigen Zahnrädern. Diese sind häufig sehr teuer. Die Werkstücke werden in vielen Fällen durch diskontinuierliches Profilschleifen bearbeitet. Es besteht die Forderung, derartige Räder in kurzer Zeit schleifbrandfrei zu fertigen. Leider existieren zurzeit keine Grenzwerte für die anzuwendenden technologischen Prozessparameter, bei deren Überschreitung Schleifbrand auftritt. Das Fehlen derartiger Grenzwerte führt zu mangelnder Prozesssicherheit.

Es sind nicht abrichtbare Werkzeuge zum diskontinuierlichen Profilschleifen bekannt, die aus mehreren Scheiben zusammengesetzt sind und so einen Werkzeugsatz bilden. Derartige Werkzeuge ermöglichen eine kurze Bearbeitungszeit; sie sind aber aufwändig bezüglich Handhabung und Aufbereitung am Standzeitende und müssen für jede Verzahnungsgeometrie speziell ausgelegt und gefertigt werden. Außerdem muss bei der Wahl der Spezifikation des Belages ein Kompromiss eingegangen werden, um den unterschiedlichen Anforderungen an das Werkzeug für das Schruppen und das Schlichten zu genügen. Unter anderem aufgrund dieser Mängel werden derartige Werkzeuge im Bereich großer Werkstückabmessungen nicht eingesetzt.

Aus dieser Situation leitet sich die Aufgabe ab, ein Verfahren und die dazu notwendigen Werkzeuge zu entwickeln, die es ermöglichen, beim diskontinuierlichen Profilschleifen großer Zylinderräder die Bearbeitungszeit gegenüber dem Stand der Technik deutlich zu senken und/oder die Prozesssicherheit deutlich zu steigern und dabei die Werkzeuge einfach an die jeweilige Bearbeitungsaufgabe anpassen zu können.

Diese Aufgabe wird beim gattungsgemäßen Werkzeug erfindungsgemäß mit den kennzeichnenden Merkmalen des Anspruches 1 bzw. 4 und beim gattungsgemäßen Verfahren erfindungsgemäß mit den kennzeichnenden Merkmalen des Anspruches 5 bzw. 10 bzw. 11 gelöst.

Das erfindungsgemäße Werkzeug nach Anspruch 1 ist abrichtbar und umprofilierbar. Die Geometrie der einzelnen Profile ist in Richtung der Werkzeugachse so festgelegt, dass zum Schruppen der Werkstückflanken zumindest mehr als zwei Flanken, bevorzugt alle Flanken des Werkzeuges zum Einsatz kommen. Beim Schlichten der Werkstückflanken sind die nur zum Schruppen vorgesehenen umprofilierten Flanken so weit zurückgesetzt, dass sie beim Schlichten keinen Kontakt mit den Werkstückflanken erhalten.

Das erfindungsgemäße Werkzeug nach Anspruch 4 ist so ausgebildet, dass die zum Schlichten vorgesehenen Flanken zu Scheiben gehören, die eine besonders gut zum Schlichten geeignete Spezifikation besitzen, während die übrigen Scheiben des erfindungsgemäßen Werkzeuges eine besonders gut zum Schruppen geeignete Spezifikation aufweisen. Für das Schruppen sind die zum Schlichten vorgesehenen Scheiben so weit zurückgesetzt, dass sie keinen Kontakt mit den Werkstückflanken erhalten. Zum Schlichten sind die umprofilierten Schruppflanken so weit zurückgesetzt, dass diese keinen Kontakt mit den Werkstückflanken erhalten.

Beim erfindungsgemäßen Verfahren nach Anspruch 5 ist das Werkzeug abrichtbar und umprofilierbar. Für das Schuppen werden zumindest mehr als zwei Flanken eingesetzt. Nach dem Schruppen können von den zum Schlichten vorgesehenen Werkzeugflanken die verschlissenen Partien entfernt und die zum Schlichten nicht benötigten Flanken so nachprofiliert werden, dass sie beim Schlichten keinen Kontakt mit den Werkstückflanken erhalten. Nach dem Arbeitsschritt Schruppen bzw. Schlichten einer Gruppe von Werkstückflanken wird das Werkstück gedreht, und zwar um die Anzahl der beim Schruppen bzw. beim Schlichten aktiven Werkzeugflanken, geteilt durch zwei.

Beim erfindungsgemäßen Verfahren nach Anspruch 10 kann das Werkzeug abgerichtet und umprofiliert werden. Zum Schlichten werden nur zwei Flanken eingesetzt, die zu einer Scheibe des Werkzeuges gehören. Diese Scheibe besitzt eine besonders gut zum Schlichten geeignete Spezifikation, während die übrigen Scheiben eine besonders gut zum Schruppen geeignete Spezifikation aufweisen. Für das Schruppen wird die zum Schlichten vorgesehene Scheibe durch Umprofilieren so weit zurückgesetzt, dass sie keinen Kontakt mit den Werkstückflanken erhält. Zum Schlichten werden die zum Schruppen vorgesehenen Scheiben durch Umprofilieren so weit zurückgesetzt, dass sie keinen Kontakt mit den Werkstückflanken erhalten.

Beim erfindungsgemäßen Verfahren nach Anspruch 11 kann das Werkzeug abgerichtet und umprofiliert werden. Zum Schlichten werden nur Flanken eingesetzt, die zu mindestens zwei Scheiben gehören. Diese Scheiben besitzen eine besonders gut zum Schlichten geeignete Spezifikation, während die übrigen Scheiben eine besonders gut zum Schruppen geeignete Spezifikation aufweisen. Für das Schruppen werden die zum Schlichten vorgesehenen Scheiben durch Umprofilieren so weit zurückgesetzt, dass sie keinen Kontakt mit den Werkstückflanken erhalten. Zum Schlichten werden die Schruppflanken durch Umprofilieren so weit zurückgesetzt, dass sie können Kontakt mit den Werkstückflanken erhalten.

Da beim herkömmlichen Profilieren des Werkzeuges nur die Torusfläche der Abrichtrolle eingesetzt wird, unterliegen derartige Abrichtrollen einem großen Verschleiß, und der Profiliervorgang ist zeitaufwändig. Diese Merkmale besitzen beim erfindungsgemäßen Verfahren, insbesondere nach Anspruch 5 bzw. nach Anspruch 10 bzw. nach Anspruch 11, große Bedeutung, weil bei diesem Verfahren zum Abrichten bzw. Umprofilieren des Werkzeuges deutlich mehr Volumen abzutragen ist, als dies entsprechend dem Stand der Technik der Fall ist.

Weitere Merkmale der Erfindung ergeben sich aus den weiteren Ansprüchen, der Beschreibung und den Zeichnungen.

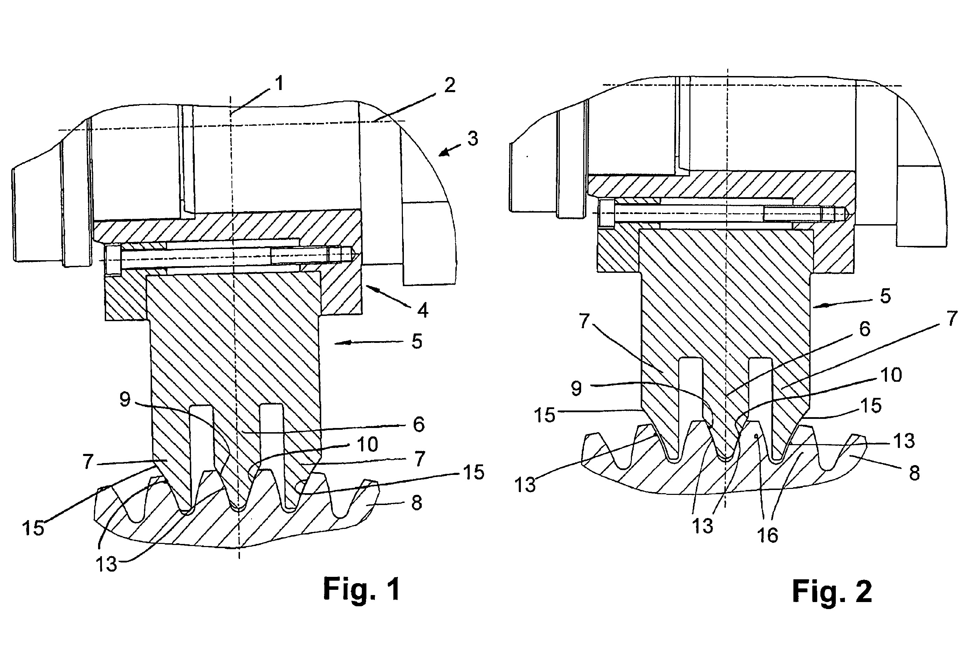

Die Erfindung wird anhand einiger Ausführungsformen näher erläutert. Vorab einige Hinweise zu den Darstellungen: Die Figuren 1 bis 7 zeigen die Werkzeuge in Eingriff mit einem geradverzahnten Werkstück. Die Werkzeuge lassen sich natürlich auch zur Bearbeitung von Schrägverzahnungen einsetzen. Die Figuren 1 bis 7 zeigen Werkzeuge, die einen gemeinsamen Grundkörper besitzen. Die Werkzeuge lassen sich natürlich auch aus separaten Scheiben zusammensetzen; auf die zeichnerische Darstellung eines derartigen Werkzeuges wurde verzichtet. Einige Scheiben können mit zwei Flanken arbeiten; sie sind im Folgenden als "breite Scheiben" bezeichnet. Andere Scheiben besitzen nur jeweils eine zum Schleifen geeignete Flanke; sie sind im Folgenden als "schmale Scheiben" bezeichnet. Es zeigen
- Fig. 1: ein erfindungsgemäßes Werkzeug aus einer breiten und zwei schmalen Scheiben beim Schruppen,
- Fig. 2: das Werkzeug nach Fig. 1 beim Schlichten, wobei die zum Schlichten eingesetzten Werkzeugflanken zur selben Scheibe gehören,
- Fig. 3: ein erfindungsgemäßes Werkzeug aus drei breiten und zwei schmalen Scheiben beim Schruppen,
- Fig. 4: das Werkzeug nach Fig. 3 beim Schlichten, wobei die zum Schlichten eingesetzten Werkzeugflanken zur selben Scheibe gehören,
- Fig. 5: ein erfindungsgemäßes Werkzeug aus zwei breiten und zwei schmalen Scheiben beim Schruppen,
- Fig. 6: das Werkzeug nach Fig. 5 beim Schlichten, wobei die zum Schlichten eingesetzten Werkzeugflanken zu benachbarten Scheiben gehören,
- Fig. 7: ein erfindungsgemäßes Werkzeug aus einer breiten und zwei schmalen Scheiben beim Schruppen einer Innenverzahnung,
- Fig. 8: in schematischer Darstellung den Profiliervorgang des Werkzeuges mittels einer Abrichtrolle am Beispiel einer breiten Scheibe.

Entsprechend dem Stand der Technik wird im Bereich großer Werkstückabmessungen mit nur einer Profilschleifscheibe gearbeitet. Die Scheibe wird dazu über die Wahl günstiger technologischer Werte für das Abrichten zum Schruppen bzw. Schlichten an die unterschiedlichen Anforderungen beider Prozesse angepasst. Um die Hauptzeit möglichst klein zu halten, arbeitet man mit möglichst hohem bezogenen Zeitspanungsvolumen. Mit zunehmendem bezogenen Zeitspanungsvolumen steigt das Schleifbrandrisiko. Diese gegensinnigen Effekte des bezogenen Zeitspanungsvolumens stellen ein großes Problem für die Praxis dar.

Zum bezogenen Zeitspanungsvolumen eine Anmerkung: Das bezogene Zeitspanungsvolumen ist kein Kennwert, der eine eindeutige Grenze für das Entstehen von Schleifbrand darstellt. Dies gilt selbst für den Fall, dass alle bekannten Einflüsse auf die Entstehung von Schleifbrand, wie zum Beispiel Werkstückhärte, Zusetzen der Scheibe, Kühlschmierstoffzufuhr usw., konstant gehalten werden. Trotzdem arbeitet man in der Praxis mit dieser Größe, weil zurzeit keine geeignetere zur Prozessbeurteilung bekannt ist.

Im Folgenden wird ein Weg aufgezeigt, der es ermöglicht, die Hauptzeit und damit die Bearbeitungszeit zu senken und/oder das Schleifbrandrisiko zu verringern. Während beim Stand der Technik nur zwei Werkzeugflanken zur Verfügung stehen, die zeitgleich das Zerspanen vornehmen, stehen beim erfindungsgemäßen Werkzeug und beim erfindungsgemäßen Verfahren insbesondere beim Schruppen deutlich mehr Werkzeugflanken zeitgleich mit dem Werkstück in Eingriff. Unterstellt man einmal konstantes Aufmass an allen Flanken des Werkstückes und arbeitet man erfindungsgemäß unter den technologischen Bedingungen, wie sie dem Stand der Technik entsprechen, so ändert sich beim Einsatz des erfindungsgemäßen Werkzeuges und Anwendung des erfindungsgemäßen Verfahrens die Hauptzeit beim Schruppen um den Faktor 2/Anzahl der beim Schruppen aktiven Werkzeugflanken. Dies gilt für Geradverzahnung. Auch beim Bearbeiten von schrägverzahnten Zylinderrädern lässt sich die Hauptzeit deutlich senken.

Der Vorteil der Erfindung wird unterstrichen durch die Tatsache, dass bei den hier betrachteten großen Werkstücken der für das Schruppen benötigte Anteil der Hauptzeit deutlich größer ist als der zum Schlichten benötigte Anteil. Den Hauptzeitgewinn kann man nutzen, um das Werkstück in kürzerer Zeit, verglichen mit dem Stand der Technik, zu bearbeiten. Es ist auch möglich, die Hauptzeit entsprechend dem Stand der Technik beizubehalten und so das Schleifbrandrisiko zu reduzieren. In der Praxis wird man eine Kombination beider Maßnahmen verwirklichen und so Hauptzeit und Schleifbrandrisiko um jeweils einen bestimmten Wert senken.

In den Fig. 1 bis 7 sind unterschiedlich gestaltete Werkzeuge 5 schematisch dargestellt. Die Werkzeuge 5 sitzen auf einer Werkzeugspindel 3, die um eine Achse 2 drehbar ist. Mit 1 ist die Maschinenmitte angegeben. Das Werkzeug 5 sitzt in einer Werkzeugaufnahme 4. Im Ausführungsbeispiel gemäß den Fig. 1 und 2 hat das Werkzeug eine breite Scheibe 6, die symmetrisch zwischen zwei schmalen Scheiben 7 liegt. Das Werkzeug 5 ist spiegelsymmetrisch zur Maschinenmitte 1 ausgebildet. Die mittlere, breite Scheibe 6 hat zwei Flanken 9, 10, während die beiden schmalen Scheiben 7 jeweils nur eine zum Schleifen geeignete Flanke 15 aufweisen. Bei dem in Fig. 1 dargestellten Schruppvorgang bearbeiten die Flanken 9, 10 und 15 des Werkzeuges 5 die Flanken 13 des Werkstückes 8, das ein außenverzahntes Werkstück ist.

Beim Schruppvorgang gemäß Fig. 1 sind sämtliche Werkzeugflanken 9, 10, 15 in Eingriff mit den Werkstückflanken 13. Beim Schlichten (Fig. 2) arbeiten nur die Werkzeugflanken 9, 10 der breiten Scheibe 6 an den Werkstückflanken 13, während die Werkzeugflanken 15 der schmalen Scheiben 7 Abstand von den Werkstückflanken 13 haben. Bei diesem Werkzeug 5 erfolgt das Schlichten gleichzeitig mit den beiden Werkzeugflanken 9, 10 der breiten Scheibe 6, die die Werkstückflanken 13 benachbarter Zähne 16 des Werkstückes 8 bearbeiten. Beim Schlichten des Werkstückes 8 liegen somit gleiche Verhältnisse vor wie beim Stand der Technik. Aus diesem Grunde lassen sich die vom Stand der Technik her bekannten Flankenmodifikationen auch mit bekannten Mitteln erzeugen.

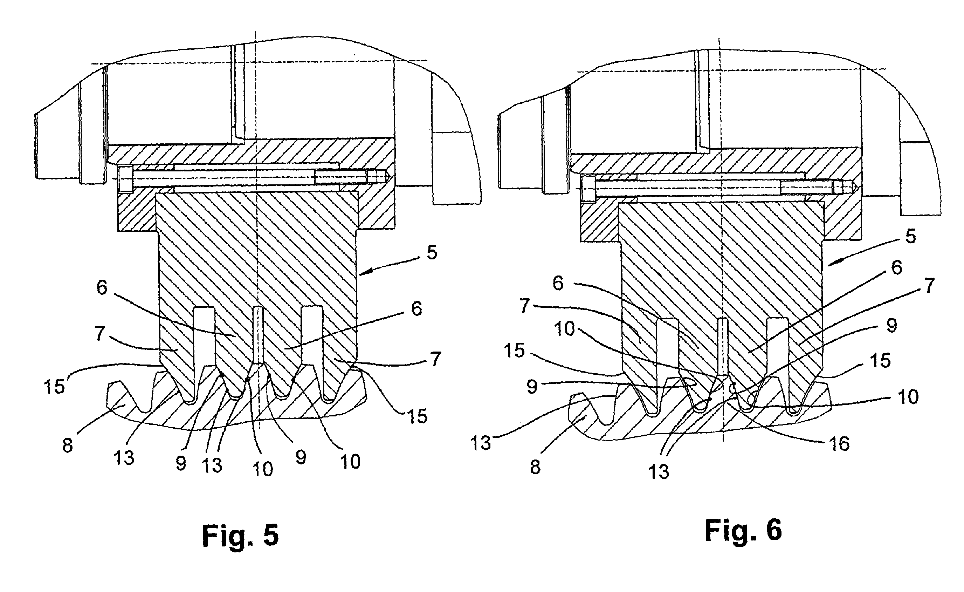

Bei Werkzeugen 5 entsprechend den Fig. 5 und 6 gehören die zum Schlichten eingesetzten Flanken 9, 10 des Werkzeuges 5 zu benachbarten Scheiben 6 des Werkzeugsatzes (Fig. 6). Damit liegen hier andere Verhältnisse vor als beim Stand der Technik; zur Erzeugung von Verzahnungen mit komplizierten Flankenmodifikationen ist bei einem solchen Werkzeug eine gegenüber dem Stand der Technik geänderte Software erforderlich.

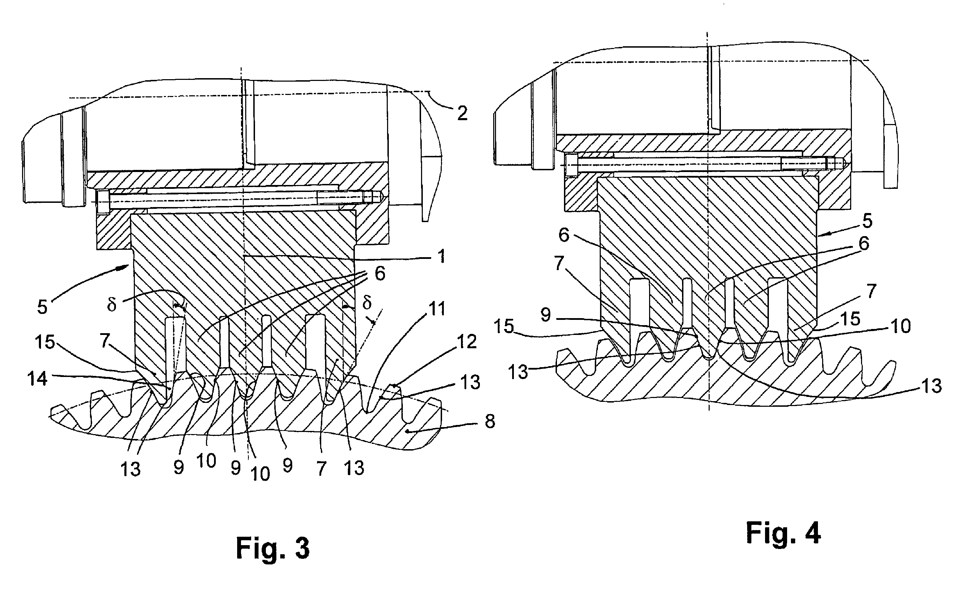

Das Werkzeug 5 gemäß den Fig. 3 und 4, das wiederum symmetrisch zur Maschinenmitte 1 ausgebildet ist, hat drei mit Abstand nebeneinander liegende breite Scheiben 6, die zwischen den schmalen Scheiben 7 des Werkzeugsatzes angeordnet sind. Die Werkzeugflanken 9, 10 der breiten Scheiben 6 und die Werkzeugflanken 15 der schmalen Scheiben 7 sind beim Schruppvorgang in Eingriff mit den Werkstückflanken 13. Beim Schlichten (Fig. 4) sind nur die Flanken 9, 10 der mittleren breiten Scheibe 6 in Eingriff mit den Werkstückflanken 13, während die Flanken 9, 10, 15 der anderen Scheiben 6, 7 Abstand von den Werkstückflanken 13 haben. Wie beim vorigen Ausführungsbeispiel gehören die Flanken 9, 10 zur selben Scheibe 6 des Werkzeugsatzes.

Beim Werkzeug 5 gemäß den Fig. 5 und 6 sind zwei mittlere breite Scheiben 6 vorgesehen, die zwischen zwei schmalen Scheiben 7 liegen. Die breiten Scheiben 6 haben entsprechend den vorigen Ausführungsformen jeweils zwei Werkzeugflanken 9, 10, während die schmalen Scheiben 7 wiederum jeweils nur eine Werkzeugflanke 15 aufweisen. Während des Schruppens (Fig. 5) sind die Scheiben 6, 7 mit ihren Werkzeugflanken 9, 10, 15 in Eingriff mit den Werkstückflanken 13. Beim Schlichten (Fig. 6) sind nur die einander unmittelbar benachbarten Flanken 9, 10 der beiden mittleren breiten Scheiben 6 in Eingriff mit den beiden Werkstückflanken 13 eines Werkstückzahns 16. Die anderen Flanken 9, 10 der beiden Scheiben 6 haben keinen Kontakt mit den Werkstückflanken 13.

Es lassen sich auch Werkzeuge auslegen, die nicht in den Figuren dargestellt sind. So ist es beispielsweise möglich, mehr als nur zwei schmale Scheiben 7 für ein Werkzeug 5 vorzusehen. Es ist auch möglich, mehr als nur zwei Werkzeugflanken 9, 10 zum Schlichten einzusetzen. Dies setzt aber voraus, dass am Werkstück 8 nur einfache Flankenmodifikationen erforderlich sind und keine zu hohen Forderungen bezüglich der geometrischen Qualität der Verzahnung bestehen und die Werkstückzähnezahl hoch ist, weil sonst an den verschiedenen Flanken 13 zu unterschiedliche Zerspanbedingungen vorliegen und trotz gleicher Radialzustellung des Werkzeuges 5 unterschiedliche Flankenrauheiten, unterschiedliche Profilwinkelabweichungen und Teilungs-Einzelabweichungen auftreten.

Beim Profilschleifen zylindrischer Verzahnungen liegen komplexe Eingriffsverhältnisse vor. Besondere Bedeutung kommt in diesem Zusammenhang dem Öffnungswinkel ö zu; dies ist der Winkel zwischen der Tangente an die Werkstückflanke 13 und der Normalen auf die Werkzeugdrehachse 2 im Tangentenberührpunkt (Fig. 3). Dieser Winkel ändert sich zwischen Fuß 11 und Kopf 12 der Werkstückflanke 13 und zusätzlich mit der Lage des betrachteten Punktes zur Maschinenmitte 1. Je kleiner dieser Winkel δ ist, umso ungünstigere Eingriffsbedingungen liegen vor. In Fig. 3 ist dieser Winkel δ für zwei Linksflanken 13 des Werkstückes 8 eingezeichnet. In Fig. 3 beträgt der Winkel δ im rechten Teil der Darstellung etwa 30°, im linken Teil nur etwa 10°. Der Winkel ö im linken Teil der Darstellung gemäß Fig. 3 ist für eine sinnvolle Bearbeitung zu klein. Aus diesem Grunde ist hier kein Kontakt mit dem Werkzeug 5 erwünscht. In der entsprechenden Zahnlücke 14 ist deshalb nur eine schmale Scheibe 7 vorgesehen; diese steht ausschließlich mit der rechten Werkstückflanke 13 in Kontakt. Dort liegt ein ausreichend großer Öffnungswinkel vor.

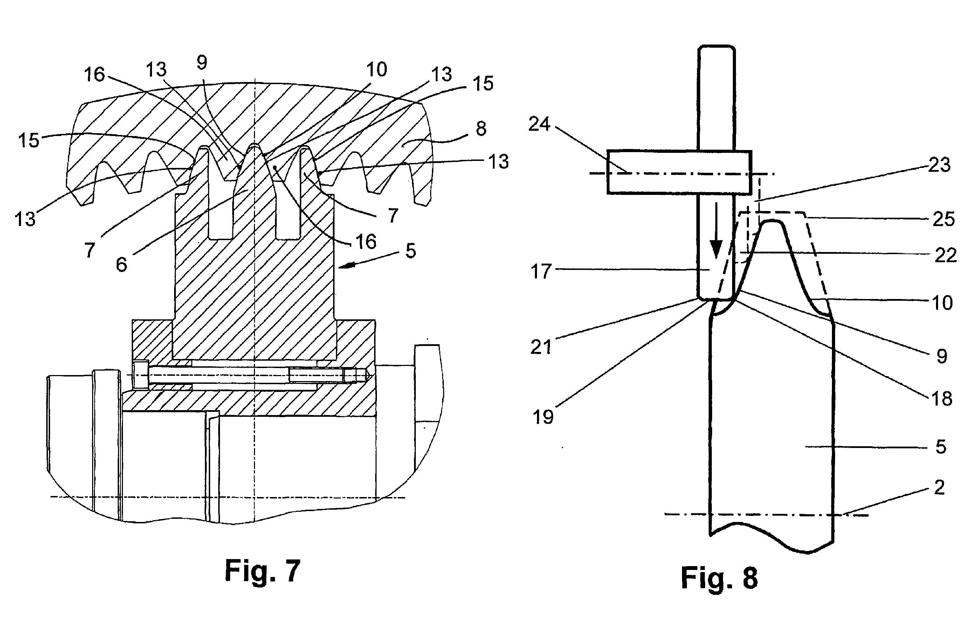

Aus Figur 7 geht hervor, dass das erfindungsgemäße Verfahren auch zur Bearbeitung von Innenverzahnungen geeignet ist. Das Werkzeug 5 besitzt eine breite Scheibe 6 und zwei schmale Scheiben 7. Dargestellt ist das Werkzeug 5 beim Schruppen des Werkstückes 8. Dabei weisen die beiden Werkzeugflanken 15 der schmalen Scheiben 7 und die Flanken 9 und 10 der breiten Scheibe 6 Kontakt mit den Werkstückflanken 13 auf. Ähnlich wie anhand der Figuren 1 und 2 für außenverzahnte Werkstücke erläutert, lässt sich das Werkzeug nach Fig. 7 auch zum Schlichten der Flanken innenverzahnter Werkstücke einsetzen. Dazu werden die Werkzeugflanken 15 der schmalen Scheiben 7 so weit zurückgesetzt, dass nur die Werkzeugflanken 9,10 der breiten Scheibe 6 Kontakt mit den Werkstückflanken 13 benachbarter Werkstückzähne 16 erhalten.

Sofern die Werkzeuge nach den Fig. 1 bis 7 aus einem Satz separater Scheiben oder Scheibensätze zusammengesetzt, also nicht aus einem gemeinsamen Grundkörper hergestellt sind, können die zum Schruppen bzw. zum Schlichten eingesetzten Scheiben unterschiedliche Spezifikation besitzen.

Bei einem (nicht dargestellten) Ausführungsbeispiel werden zum Schruppen und Schlichten unterschiedliche Werkzeuge eingesetzt. Diese Werkzeuge besitzen für die jeweilige Bearbeitungsaufgabe unterschiedliche Spezifikationen bezüglich Material und Oberflächengestalt. Die unterschiedlichen Werkzeuge können gemeinsam auf einer Spindel aufgenommen sein und zum Bearbeiten in Arbeitsposition gefahren werden. Es ist auch möglich, die Werkzeuge für die jeweilige Operation zu wechseln. Das Werkzeug zum Schlichten kann zwei oder mehr Flanken aufweisen. Das Werkzeug zum Schruppen weist erfindungsgemäß mehrere in Achsrichtung nebeneinander angeordnete Profile auf, die so ausgelegt sind wie die Profile separater Profilschleifscheiben, die an den entsprechenden Stellen auf der Werkzeugspindel positioniert sind.

Zum Profilieren eines neuen Werkzeuges bzw. zum Umprofilieren (für den Einsatz bei einem Werkstück mit geänderter Verzahnungsgeometrie) werden Abrichtrollen 17 mit einer Drehachse 24 (Fig. 8) eingesetzt. Derartige Werkzeuge arbeiten üblicherweise nur mit einer Torusfläche 18 bzw. 21 je Werkzeugflanke. Sie profilieren dabei in mehreren Arbeitsschritten die jeweilige Werkzeugflanke vom Fuß zum Kopf. Dabei liegt "Punktkontakt" vor. Die Torusflächen 18,21 sind deshalb hohem Verschleiß ausgesetzt, und es entsteht eine hohe Bearbeitungszeit. Diese Verhältnisse werden dadurch deutlich verbessert, dass neben einer der Torusflächen 18,21 auch eine unmittelbar anschließende Zylindermantelfläche 19 zum Abrichten herangezogen wird. Um die Zylindermantelfläche 19 zum Materialabtrag von der Schleifscheibe 5 nutzen zu können, muss ein großes Aufmass vorhanden sein und der Abrichtvorgang muss in Richtung vom Kopf zum Fuß (s. Pfeile in Fig. 8) erfolgen.

Die Abrichtrolle 17 kann eine radiale Vorschubbewegung, das heißt eine Vorschubbewegung radial zur Drehachse 2 des Werkzeuges 5 (siehe Pfeil in Fig. 8), ausführen oder über eine Bahn parallel zur Endkontur der Flanken 9 bzw. 10 des Werkzeuges 5 zugestellt werden. Bei der radialen Vorschubbewegung wird der radiale Zustellbetrag an die gewünschte Endkontur der Flanken 9,10 angepasst. In Fig. 8 ist die Abrichtrolle 17 am Ende eines Arbeitsschrittes und in kleinen Ausschnitten 22,23 am Ende weiterer Arbeitsschritte beim Bearbeiten der Flanke 9 dargestellt. Bei dieser Art des Abrichtens wird die Endkontur der jeweiligen Werkzeugflanke durch Stufen angenähert.

Die Werkzeugflanke 10 wird entsprechend spiegelbildlich zur Bearbeitung der Werkzeugflanke 9 mit der zweiten Torusfläche 21 und der unmittelbar anschließenden Zylindermantelfläche 19 der Abrichtrolle 17 bearbeitet. Anschließend an das hier erläuterte Schruppabrichten erfolgt ein Schlichtabrichten; dies wird in bekannter Weise nur mit einer der Torusflächen 18,21 je Werkzeugflanke ausgeführt.

## Patentansprüche

1. Werkzeug zum diskontinuierlichen Profilschleifen von außen- bzw. innenverzahnten Zylinderrädern, das rotationssymmetrisch ausgebildet ist und im Achsschnitt mehrere in Achsrichtung nebeneinander angeordnete Profile besitzt, die so ausgelegt sind wie die Profile separater Profilschleifscheiben, die an den entsprechenden Stellen auf einer Werkzeugspindel positioniert sind und einen Scheibensatz bilden,
**dadurch gekennzeichnet, dass** das Werkzeug (5) abrichtbar und umprofilierbar ist und die Geometrie der einzelnen Profile so festgelegt ist, dass zum Schruppen zumindest mehr als zwei Flanken zum Einsatz kommen und dass beim Schlichten die nur zum Schruppen vorgesehenen umprofilierten Flanken so weit zurückgesetzt sind, dass sie beim Schlichten keinen Kontakt mit den Werkstückflanken erhalten.

2. Werkzeug nach Anspruch 1,
**dadurch gekennzeichnet, dass** das Werkzeug (5) zumindest im Bereich der Profile aus einem gemeinsamen Grundkörper gefertigt ist.

3. Werkzeug nach Anspruch 1,
**dadurch gekennzeichnet, dass** das Werkzeug (5) aus mehreren separat gefertigten Schreiben zusammengesetzt ist.

4. Werkzeug zum diskontinuierlichen Profilschleifen von außen- bzw. innenverzahnten Zylinderrädern, das aus mehreren in Achsrichtung des Werkzeuges nebeneinander angeordneten Profilschleifscheiben besteht, die einen Scheibensatz bilden,
**dadurch gekennzeichnet, dass** das Werkzeug (5) abrichtbar und umprofilierbar ist und die Geometrie der einzelnen Scheiben so festgelegt ist, dass die zum Schlichten vorgesehenen Flanken zu Scheiben gehören, die eine besonders gut zum Schlichten geeignete Spezifikation besitzen, während die übrigen Scheiben (7) eine besonders gut zum Schruppen geeignete Spezifikation aufweisen, und für das Schruppen die zum Schlichten vorgesehenen umprofilierten Scheiben so weit zurückgesetzt sind, dass sie keinen Kontakt mit den Werkstückflanken (13) erhalten, und zum Schlichten die umprofilierten Schruppflanken (15) so weit zurückgesetzt sind, dass diese keinen Kontakt mit den Werkstückflanken (13) erhalten.

5. Verfahren zum diskontinuierlichen Profilschleifen von außen- bzw. innenverzahnten Zylinderrädern mit einem Werkzeug, dessen Hüllgeometrie derjenigen eines aus mehreren nebeneinander angeordneten Profilschleifscheiben eines Satzes besteht,
**dadurch gekennzeichnet, dass** das Werkzeug (5) abrichtbar und umprofilierbar ist und für das Schruppen zumindest mehr als zwei Flanken eingesetzt werden und nach dem Schruppen von den zum Schlichten vorgesehenen Werkzeugflanken die verschlissenen Partien entfernt werden und die zum Schlichten nicht benötigten Flanken so nachprofiliert werden, dass sie beim Schlichten keinen Kontakt mit den Werkstückflanken (13) erhalten, und dass nach dem Arbeitsschritt Schruppen bzw. Schlichten einer Gruppe von Werkstückflanken das Werkstück gedreht wird (Teilvorgang), und zwar um die Anzahl der beim Schruppen bzw. beim Schlichten aktiven Werkzeugflanken geteilt durch zwei.

6. Verfahren nach Anspruch 5,
**dadurch gekennzeichnet, dass** die zum Schlichten nicht benötigten Flanken so nachprofiliert werden, dass sie beim Schlichten keinen Kontakt mit den Werkstückflanken (13) erhalten, aber die für den nächsten Schruppvorgang benötigte Lage einnehmen.

7. Verfahren nach Anspruch 5 oder 6,
**dadurch gekennzeichnet, dass** das Abrichten bzw. Umprofilieren des Werkzeuges (5) auf der Bearbeitungsmaschine erfolgt.

8. Verfahren nach Anspruch 5 oder 6,
**dadurch gekennzeichnet, dass** zum Schlichten nur Flanken (9, 10) des Werkzeuges (5) zum Einsatz kommen, die zur selben Scheibe (6) des Scheibensatzes gehören, so dass alle erforderlichen Flankenmodifikationen der Verzahnung entsprechend dem Stand der Technik erzeugt werden können.

9. Verfahren nach Anspruch 5 oder 6,
**dadurch gekennzeichnet, dass** zum Schlichten Flanken (9, 10) des Werkzeuges (5) zum Einsatz kommen, die zu mehr als einer Scheibe (6) des Scheibensatzes gehören.

10. Verfahren zum diskontinuierlichen Profilschleifen von außen- bzw. innenverzahnten Zylinderrädern mit einem Werkzeug, das aus mehreren in Achsrichtung des Werkzeuges nebeneinander angeordneten Profilschleifscheiben besteht, die einen Scheibensatz bilden,
**dadurch gekennzeichnet, dass** das Werkzeug abrichtbar und umprofilierbar ist, zum Schlichten nur zwei Flanken eingesetzt werden, die zu einer Scheibe (6) gehören und diese Scheibe eine besonders gut zum Schlichten geeignete Spezifikation besitzt, während die übrigen Scheiben eine besonders gut zum Schruppen geeignete Spezifikation aufweisen, und für das Schruppen die zum Schlichten vorgesehene Scheibe durch Umprofilieren so weit zurückgesetzt wird, dass sie keinen Kontakt mit den Werkstückflanken (13) erhält, und zum Schlichten die Schruppflanken durch Umprofilieren so weit zurückgesetzt werden, dass sie keinen Kontakt mit den Werkstückflanken (13) erhalten.

11. Verfahren zum diskontinuierlichen Profilschleifen von außen- bzw. innenverzahnten Zylinderrädern mit einem Werkzeug, das aus mehreren in Achsrichtung des Werkzeuges nebeneinander angeordneten Profilschleifscheiben besteht, die einen Scheibensatz bilden,
**dadurch gekennzeichnet, dass** das Werkzeug abrichtbar und umprofilierbar ist, zum Schlichten nur Flanken eingesetzt werden, die zu mindestens zwei Scheiben (6) gehören und diese Scheiben eine besonders gut zum Schlichten geeignete Spezifikation besitzen, während die übrigen Scheiben eine besonders gut zum Schruppen geeignete Spezifikation aufweisen, und für das Schruppen die zum Schlichten vorgesehenen Scheiben durch Umprofilieren so weit zurückgesetzt werden, dass sie keinen Kontakt mit den Werkstückflanken (13) erhalten, und zum Schlichten die Schruppflanken durch Umprofilieren so weit zurückgesetzt werden, dass sie keinen Kontakt mit den Werkstückflanken (13) erhalten.
